# EUROPÄISCHE PATENTSCHRIFT

(11) **EP 1 029 796 B1**
(45) Veröffentlichungstag und Bekanntmachung des Hinweises auf die Patenterteilung: **05.06.2002**
(21) Anmeldenummer: 00102253.2
(22) Anmeldetag: 15.02.2000
(51) Int. Cl.: B65D 21/02, B65D 43/06, B65D 25/32

(54) **Kunststoffbehälter und Verfahren sowie Vorrichtung zu dessen Herstellung und Handhabung**
Plastic container and method and device for its production and manipulation
Récipient en matière plastique et méthode et dispositif pour sa production et manipulation

(30) Priorität: 16.02.1999 DE 19906441; 14.12.1999 DE 19960270
(43) Veröffentlichungstag der Anmeldung: 23.08.2000
(73) Patentinhaber: GRT Verpackungen aus Kunststoff GmbH, 04539 Groitzsch (DE)
(72) Erfinder: Heyn, Klaus, 90419 Nürnberg (DE)
(74) Vertreter: VOSSIUS & PARTNER

(56) Entgegenhaltungen:
- DE-A- 2 328 214
- DE-A- 4 444 573
- DE-U- 8 401 526
- DE-U- 29 802 048
- US-A- 3 967 731
- US-A- 5 111 954

## Beschreibung

Die vorliegende Erfindung betrifft einen stapelbaren Kunststoffbehälter mit Deckel und insbesondere Henkel sowie ein Verfahren und eine Vorrichtung zu dessen Herstellung und Handhabung. Insbesondere ist der erfindungsgemäße Kunststoffbehälter ein Eimer mit Henkel oder ein Becher mit oder ohne Henkel.

Üblicherweise werden Kunststoffbehälter, wie Eimer oder Becher, in einem Spritzgießverfahren hergestellt. Oftmals ist an Kunststoffbehältern ein Henkel vorgesehen, der in einem separaten Spritzgießverfahren oder sonstigem Herstellungsverfahren bereitgestellt und anschließend am Behälter montiert wird. Eine Vielzahl von Behältern, wie z.B. Behälter für Lebensmittel, wie Eiscreme, Marmelade oder Gurken und für andere Produkte wie Flüssigkeiten, Pasten oder Stückgut, wird nach dem Befüllen mit einem beliebigen Füllgut mit einem Deckel verschlossen.

Nachteilig bei allen bekannten Herstellverfahren und den dazu erforderlichen Werkzeugen, insbesondere der Spritzgießform, ist die aufwendige und umständliche Herstellung der Einzelteile und anschließende Montage, was zu einem teuren Herstellprozeß führt. Die bekannten Behälter haben ferner den Nachteil, daß sich ihre Henkel beim Stapeln mit anderen Behältern verhaken, wodurch ein problemloses und einfaches Handhaben, z.B. zum Befüllen, Bedrucken oder Verschließen der Behälter nicht möglich ist.

DE-U-84 01 526 beschreibt einen Eimer mit einer Justiernut und einer Justierfeder. Die Justierfeder ist in Verlängerung des Griffhalters ausgebildet. Oberhalb des Griffhalters bzw. der Feder befindet sich eine Nut.

Die DE-A-44 44 573 offenbart einen originalitätsgesicherten Behälter. Der Wannenrand ist doppelwandig ausgebildet und stellt ein nach unten offenes U dar, auf das der Deckelrand aufgepaßt ist. Am äußeren Schenkel des "U" schnappt der Deckel mit einer Schnappwulst hinter eine Aussparung.

Die US-A-3 967 731 offenbart eine stapelbaren Deckel samt Behälter. Der Deckel sitzt auf dem Behälter und eine Siegelfolie erstreckt sich entlang der Unterseite des Deckels.

Die DE-A-23 28 214 offenbart einen Behälter mit einem auf seinem Öffnungswulst aufsetzbaren Deckel.

Es ist eine Aufgabe der vorliegenden Erfindung, ein gegenüber dem Stand der Technik verbessertes Verfahren und eine verbesserte Vorrichtung zur Herstellung von Kunststoffbehältern, wie Eimer oder Becher, sowie einen stapelbaren Kunststoffbehälter und ein entsprechendes Handhabungsverfahren bereitzustellen. Diese Aufgabe wird mit den Merkmalen der Patentansprüche gelöst.

Das erfindungsgemäße Verfahren zur Herstellung von Eimern und Bechern umfaßt das gleichzeitige Spritzgießen des Behälters und einem daran vorsehbaren Henkel in einer Spritzgießform und das Montieren des Henkels am Behälter beim Entformen.

Die Vorrichtung zum Herstellen und Montieren von Eimern oder Bechern mit Henkeln weist eine Spritzgießform auf, in der Behälter und zugehörige Henkel gemeinsam spritzgegossen werden, und eine Entformeinrichtung mit der jeweils ein Behälter und der zugehörige Henkel beim Ausgeben aus der Spritzgießform zusammengebaut werden.

Der erfindungsgemäße Behälter weist ferner eine Verdrehsicherung gegen Verdrehen gestapelter Behälter relativ zueinander auf. Dazu ist in einer Halteeinrichtung für einen Deckel am oberen Rand des Behälters eine Aussparung vorgesehen, die im gestapelten Zustand mit einem an der Unterseite der Halteeinrichtung vorgesehenen Sicherungselement eines darüber gestapelten Behälters in Eingriff bringbar ist. Das Sicherungselement, das im Zwischenraum zwischen der Behälteraußenwand und einem umgestülpten oberen Randbereich des Behälters ausgebildet ist, und die Aussparung sind dazu beidseitig abgeschrägt oder abgerundet, so daß diese beiden Elemente leichter in Eingriff miteinander kommen. Ferner ist der erfindungsgemäße Behälter an seinem oberen Rand derart ausgebildet, daß Dicht- und Halteabschnitt für verschiedene Deckel voneinander getrennt sind. Zur besseren Handhabbarkeit des erfindungsgemäßen Behälters ist der Henkel vorzugsweise an mindestens einem seiner Enden über den Drehpunkt hinaus in Henkellängsrichtung verlängert. Dadurch kann eine in einem Handhabungssystem vorgesehene Einrichtung mit diesem Abschnitt in Kontakt gebracht werden, um den Henkel im wesentlichen senkrecht zur Behälterlängsachse auszurichten, bevor er vom Stapel genommen wird.

Die vorliegende Erfindung wird im folgenden anhand bevorzugter Ausführungsformen unter Bezugnahme auf die Zeichnungen näher beschrieben. Es zeigen:
- Fig. 1a: eine Seitenansicht einer ersten Ausführungsform eines erfindungsgemäßen Behälters mit Deckel und Henkel;
- Fig. 1b: eine Vorderansicht des Behälters von Fig. 1a;
- Fig. 1c: einen Teilschnitt im Laschenbereich der ersten Ausführungsform des erfindungsgemäßen Behälters entlang der Linie 1c-1c von Fig. 1b;
- Fig. 1d: einen Teilschnitt im Scharnierbereich der ersten Ausführungsform des erfindungsgemäßen Behälters entlang der Linie 1d-1d von Fig. 1a;
- Fig. 1e: einen Teilschnitt im umlaufenden Kopfbereich der ersten Ausführungsform des erfindungsgemäßen Behälters;
- Fig. 1f: einen Teilabschnitt von zwei gestapelten Dichtdekkeln gemäß der ersten Ausführungsform;
- Fig. 2a: eine Seitenansicht einer zweiten Ausführungsform eines erfindungsgemäßen Behälters mit Deckel und Henkel;
- Fig. 2b: eine Vorderansicht des Behälters von Fig. 2a;
- Fig. 2c: einen Teilschnitt im Griffmuldenbereich der zweiten Ausführungsform des erfindungsgemäßen Behälters entlang der Linie 2c-2c von Fig. 2b;
- Fig. 2d: einen Teilschnitt im Scharnierbereich der zweiten Ausführungsform des erfindungsgemäßen Behälters entlang der Linie 2d-2d von Fig. 2a;
- Fig. 2e: einen Teilschnitt im umlaufenden Kopfbereich der zweiten Ausführungsform des erfindungsgemäßen Behälters;
- Fig. 2f: einen Teilschnitt von zwei gestapelten Stülpdeckeln gemäß der zweiten Ausführungsform;
- Fig. 2g: einen Teilschnitt von zwei gestapelten Stülpdeckeln gemäß der dritten Ausführungsform;
- Fig. 3: eine Darstellung übereinandergestapelter Behälter mit Verdrehsicherung gemäß einer ersten Ausführungsform, wobei die Henkel weggelassen sind;
- Fig. 4: einen Teilschnitt im Scharnierbereich der Behälter mit der Darstellung der Verdrehsicherung entlang der Linie 4-4 von Fig. 3;
- Fig. 5a: eine Lagedarstellung des erfindungsgemäßen Behälters mit Henkel in einer Spritzgießform während des Spritzvorgangs;
- Fig. 5b: eine Draufsicht gemäß Fig. 5a;

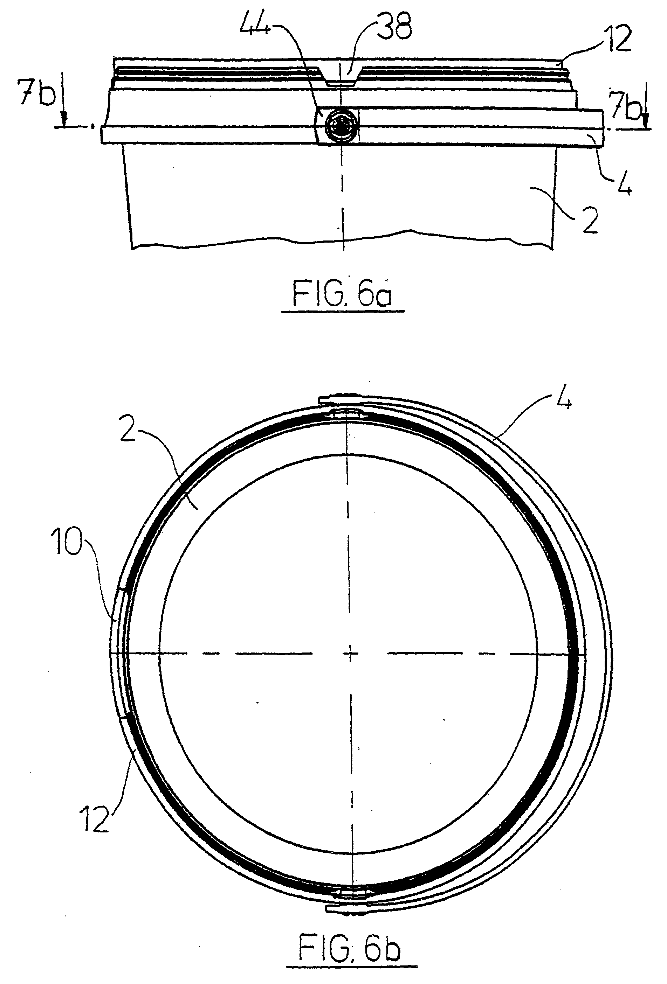

- Fig. 6a: eine Lagedarstellung des erfindungsgemäßen Behälters mit Henkel in der Spritzgießform kurz nach dem Öffnen der Form;
- Fig. 6b: eine Draufsicht gemäß Fig. 6a;
- Fig. 7a: einen Teilschnitt im Scharnierbereich des Behälters entlang der Linie 7a-7a von Figur 5a;
- Fig. 7b: einen Teilschnitt im Scharnierbereich des Behälters entlang der Linie 7b-7b von Figur 6a;
- Fig. 7c: einen Teilschnitt ähnlich zu Fig. 7a, allerdings mit dem Scharnierzapfen gemäß Fig. 9d;
- Fig. 7d: einen Teilschnitt ähnlich zu Fig. 7b, allerdings mit dem Scharnierzapfen gemäß fig. 9d;
- Fig. 8a: einen einzelnen Behälter mit Henkel kurz vor der Aufnahme durch ein Handhabungssystem;
- Fig. 8b: den Behälter gemäß Fig. 8 während der Aufnahme durch das Handhabungssystem;
- Fig. 9a: einen stark vergrößerten Ausschnitt im Scharnierbereich mit der Verdrehsicherung des erfindungsgemäßen Behälters gemäß einer ersten Ausführungsform;
- Fig. 9b: eine Draufsicht auf den Teilausschnitt von Fig. 9a;
- Fig. 9c: einen stark vergrößerten Ausschnitt im Scharnierbereich mit der Verdrehsicherung des erfindungsgemäßen Behälters gemäß einer zweiten Ausführungsform;
- Fig. 9d: eine Draufsicht auf den Teilausschnitt von Fig. 9c;
- Fig. 10a: eine Teilansicht zweier gestapelter Behälter mit einer ersten Bodengestaltung;
- Fig. 10b: eine Teilansicht zweier gestapelter Behälter mit einer zweiten Bodengestaltung;
- Fig. 11: einen Teilschnitt im Henkelbereich; und
- Fig. 12: einen Teilschnitt eines Behälters mit einem Deckel gemäß Fig. 2g.
- Fig. 13: eine Darstellung übereinander gestapelter Behälter mit Verdrehsicherung gemäß einer zweiten Ausführungsform (teilweise geschnitten entlang der Linie 13-13 in Fig. 14);
- Fig. 14: eine teilweise Draufsicht gemäß Fig. 13; und
- Fig. 15.: einen Teilschnitt im Bereich der Verdrehsicherung entlang der Linie 15-15 in Fig. 14.

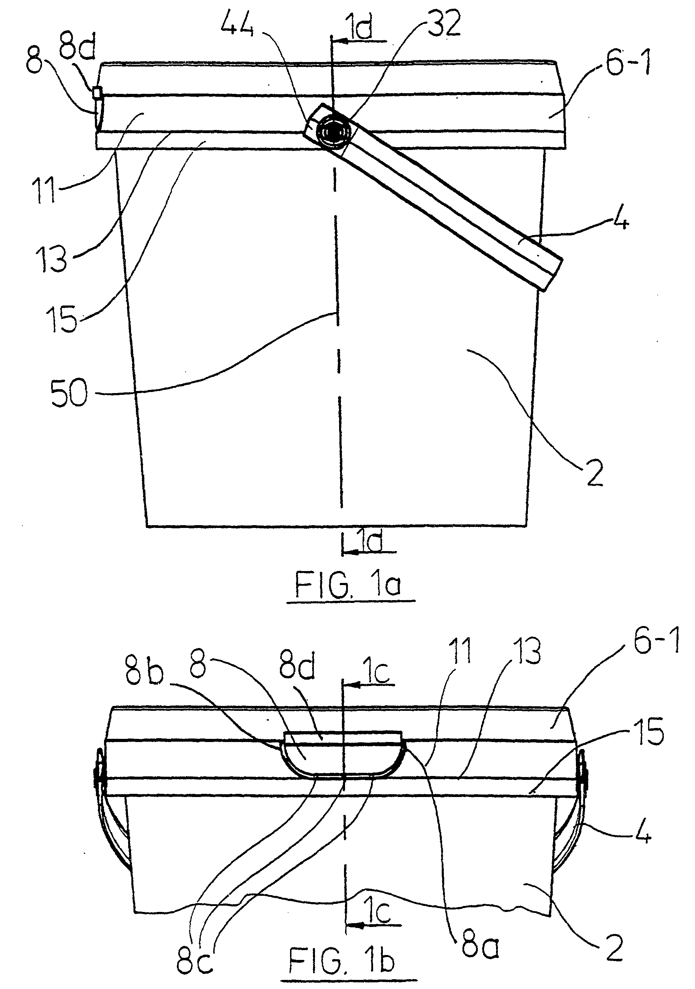

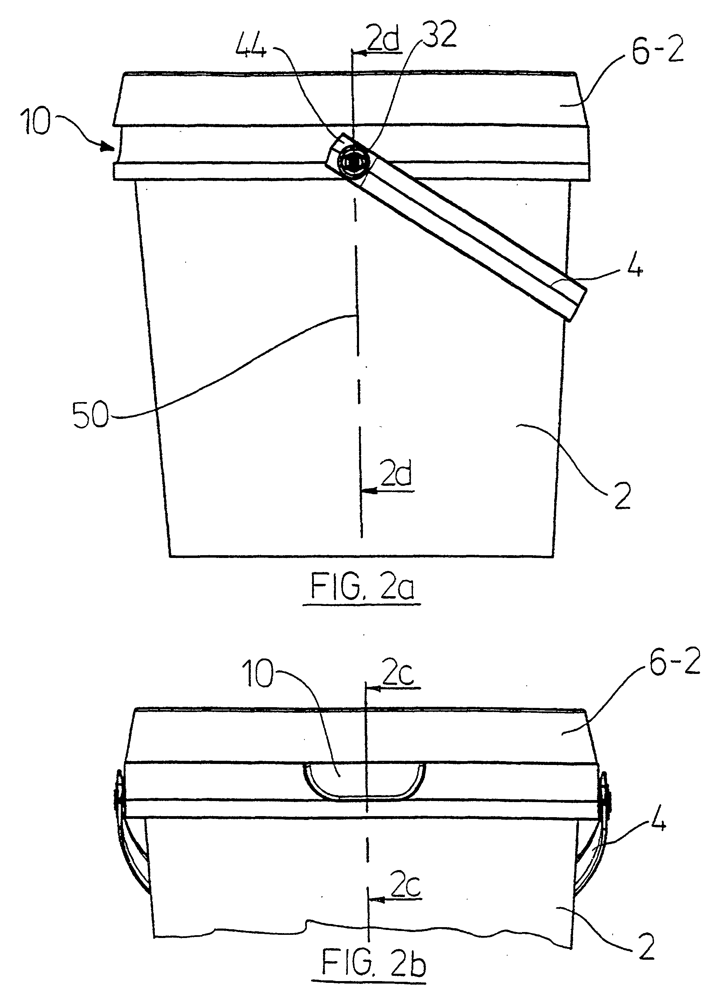

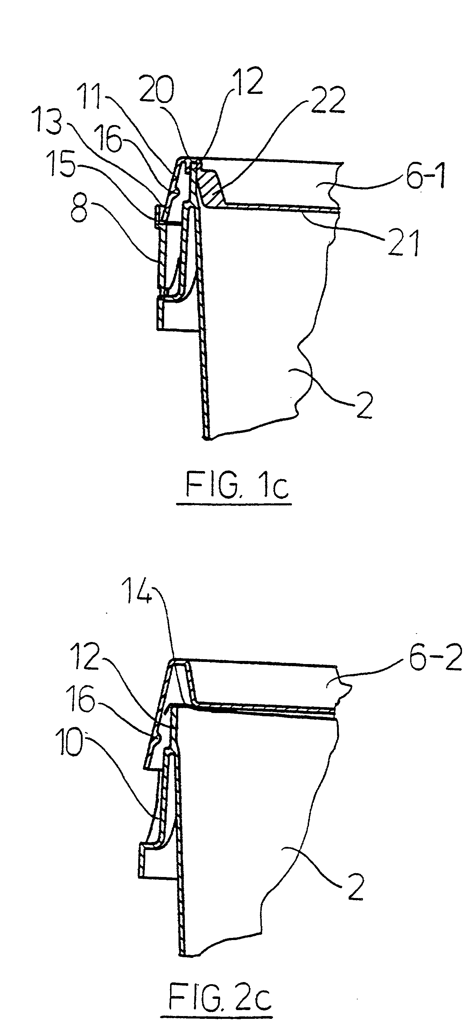

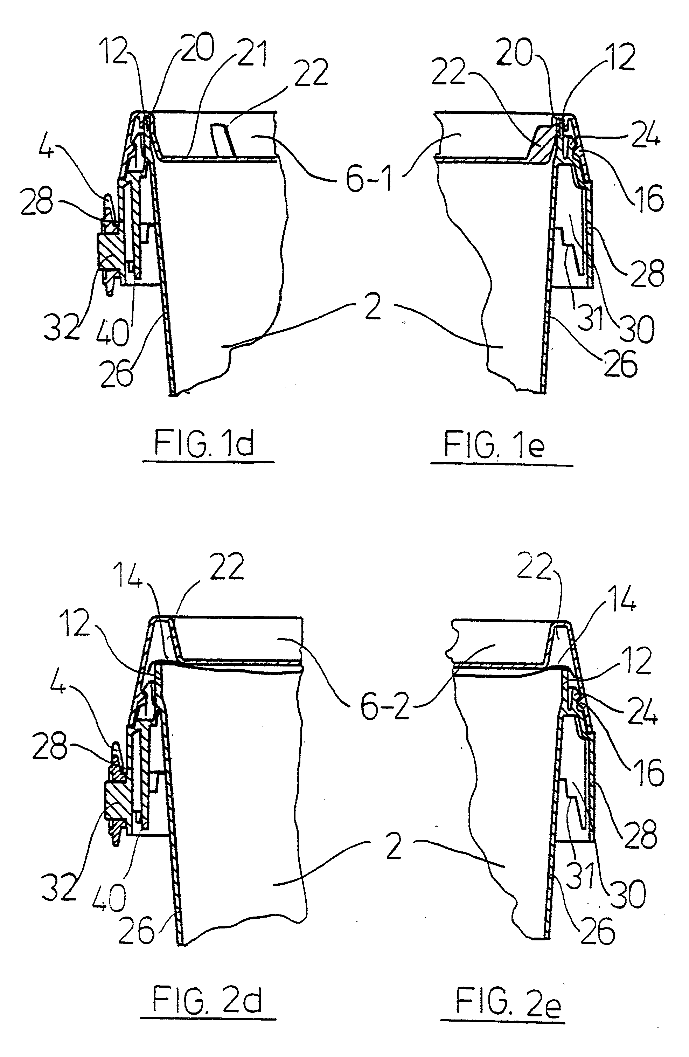

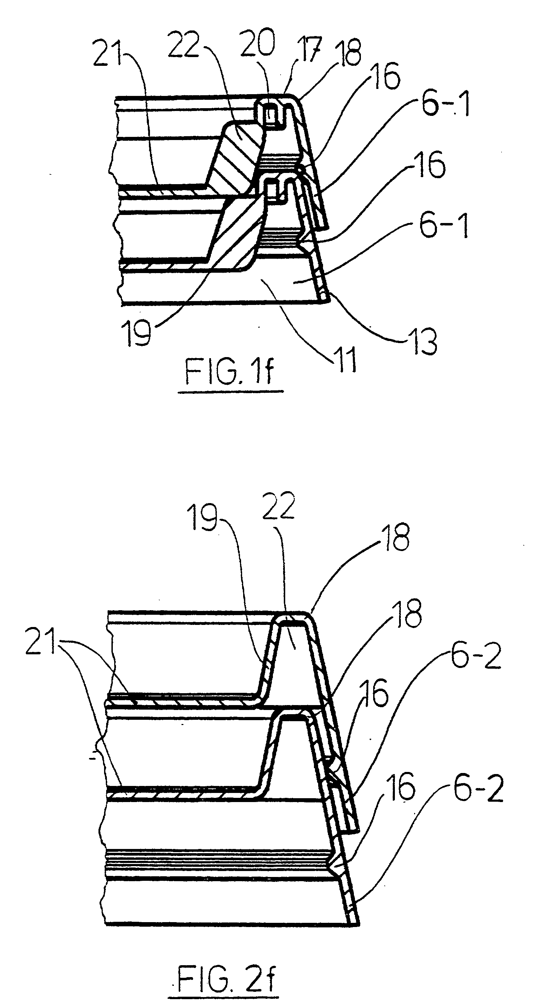

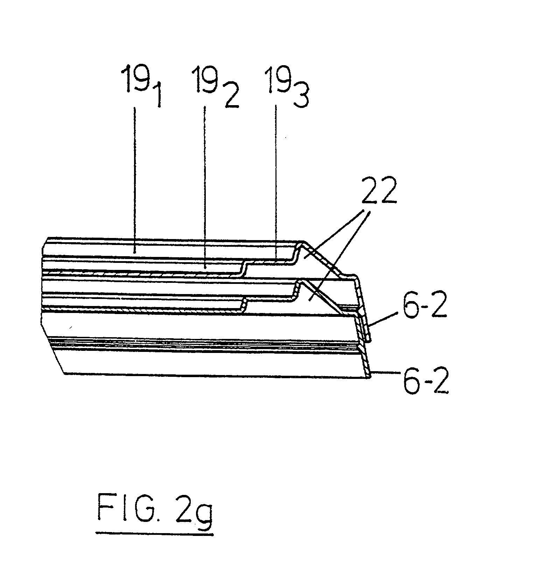

Der erfindungsgemäße Behälter (Eimer oder Becher) 2 ist beispielsweise ein Senfeimer mit einem Henkel 4 und einem Deckel 6. Der Deckel 6 kann entweder als Dichtdeckel 6-1 (Fig. 1) oder als Stülpdeckel 6-2 (Fig. 2) ausgebildet sein. Je nach Deckelart kann der Behälter einen Originalitätsschutz 8 entsprechend einer in Fig. 1 dargestellten ersten Ausführungsform oder eine freiliegende Griffmulde 10 entsprechend einer in Fig. 2 dargestellten zweiten Ausführungsform aufweisen.

Der Originalitätsschutz 8 der ersten Ausführungsform gemäß Fig. 1 gewährleistet die Kontrolle der Unversehrtheit eines im Behälter 2 befindlichen Produkts. Der Originalitätsschutz 8 ist vorzugsweise eine Originalitätslasche, die der Endverbraucher aufbrechen muß, um in die Griffmulde 10 einzugreifen und den Deckel 6-1 zu öffnen.

Der in den Figuren 1a - 1c dargestellte Originalitätsschutz 8 kann beispielsweise über einen ersten Sollbruchverbindungssteg 8a mit dem seitlich anschließenden Rand einer Umfangswand des Behälters verbunden sein. An einem gegenüber liegenden seitlich anschließenden Rand der Umfangswand ist die Originalitätslasche 8 mit einem flexiblen Verbindungsband 8b an dem Behälter befestigt. Weiterhin ist die Originalitätslasche im Bereich der Unterkante über drei weitere Sollbruchverbindungsstege 8c mit der Umfangswand verbunden. Nach dem Aufbrechen bleibt die Originalitätslasche 8 mit der Verbindungslasche 8b einseitig am Behälter 2 zur besseren Kontrolle und Erkennbarkeit hängen.

Der Deckel 6-1 sitzt dabei so auf dem Behälter 2, daß ein äußerer Umfangsabschnit 11 mit seinem unteren Randbereich 13 auf oder an einem am Behälter 2 gebildeten umlaufenden Kragen 15 sitzt, so daß der Deckel 6-1 nicht ohne vorheriges Entfernen des Originalitätsschutzes 8 abgenommen werden kann, weil zwischen Behälter 2 und Deckel 6-1 keine Eingriffsmöglichkeit besteht. Die Originalitätslasche 8 weist eine nach außen versetzte und nach oben weisende Verlängerung 8d auf. Bei aufgesetztem Deckel ragt diese Verlängerung über die Unterkante des Deckels vor.

Der Deckel 6-1 weist einen umlaufenden Rand auf, der von einer äußeren Umfangswand 11, einer Ringfläche 17 (Fig. 1f) und einer Ringwand 19 (Fig. 2f) gebildet wird. Die Ringwand 19 erstreckt sich radial innerhalb der Ringfläche 17. Der Umfangsabschnitt 11, die Ringfläche 17 und die Ringwand 19 bilden ein im wesentlichen U-förmiges Querschnittsprofil, das sich um den Behälterumfang erstreckt. Der Deckel weist einen gegenüber der Ringfläche 17 abgesetzten Mittelbereich 21 auf.

Entsprechend der Figur 1f können die einzelnen Dichtdeckel 6-1 jeweils auf vorteilhafte Weise übereinander gestapelt werden. Dazu ist an den einzelnen Deckeln 6-1 an der Innenseite der äußeren Umfangswand 11 jeweils eine vorzugsweise umlaufende Halteeinrichtung 16 vorgesehen, die sich an einer oberen Außenkante 18 der Ringfläche 17 des jeweiligen darunterliegenden Deckels abstützt. Die Halteeinrichtung 16 ist beispielsweise eine nach radial innen ragende Haltenase oder umlaufender Vorsprung. Der Dichtdeckel 6-1 weist an der Unterseite der Ringfläche 17 einen umlaufenden Steg auf, der zusammen mit einem Teil der Ringwand 19 einen vorzugsweise U-förmigen Dichtbereich 20 bildet. Der Dichtbereich 20 ist mit einem am oberen Rand des Behälters 2 gebildeten Dichtrand 12 derart in Eingriff bringbar, daß der Behälter 2 mit dem Deckel 6-1 dicht verschließbar ist. Die Halteeinrichtung 16 des Deckels 6-1 ist mit einer zugeordneten Halteeinrichtung 24 (Fig. 1e) am Behälterrand in Eingriff bringbar. Auf diese Weise sind Dicht- und Haltebereich des Deckels 6-1 am Behälter 2 räumlich und funktionell voneinander getrennt.

Darüber hinaus ist es vorteilhaft, am Deckel 6-1 Stützelemente 22 (Fig. 1e) vorzusehen, die sich beispielsweise vom Randabschnitt des Deckels radial nach innen erstrecken. Das Stützelement 22 kann entlang des Umfangs des Deckels kontinuierlich, abschnittsweise oder nur an einzelnen Stellen vorgesehen sein. Die Form bzw. Querschnittsform der Stützelemente 22 ist beispielsweise parallelogrammartig, wie in Fig. 1f gezeigt, kann jedoch auch jede andere geeignete Stützform haben.

Alternativ kann wie bei dem in Fig. 2 dargestellten Eimer 2 der Originalitätsschutz 8 weggelassen werden, so daß ein Endverbraucher direkt in die Griffmulde 10 eingreifen und den Stülpdeckel 6-2 abnehmen kann. Zur Gewährleistung der Kontrolle der Unversehrtheit des im Eimer oder Becher 2 befindlichen Produkts ist am oberen Rand des Dichtrandes 12 des Eimers/Bechers 2 eine Siegelfolie 14 vorgesehen.

Der Stülpdeckel 6-2 weist wie der vorstehend beschriebene Dichtdeckel 6-1 ein U-förmiges Ringprofil 11, 17 und 19 auf, wobei der Dichtbereich 20 weggelassen ist. Bei dieser Deckelvariante ist die Stützwand 22 vorteilhafterweise, wie in Fig. 2f gezeigt, im U-förmigen Abschnitt des Randbereichs des Dekkels 6-2 ausgebildet. Die Stützelemente 22 am Deckel 6-2 stützen sich auch am oberen Rand des Dichtrandes 12 ab, so daß der Mittelbereich 21 des Deckels nicht tiefer als die Siegelfolie 14 sein kann. Im übrigen entspricht der Haltebereich des Stülpdeckels 6-2 im wesentlichen dem des Dichtdeckels 6-1. Vorteilhaft ist der Umfangsabschnitt 11 so lang ausgebildet, daß der Mittelbereich 21 des Deckels 6-2 die Siegelfolie 14 am Eimer bzw. Becher nicht beschädigt. Dabei ist die Unterseite des Mittelbereichs 21 etwa in der Höhe des Behälterrands angeordnet, wenn der Deckel am Behälter angebracht ist.

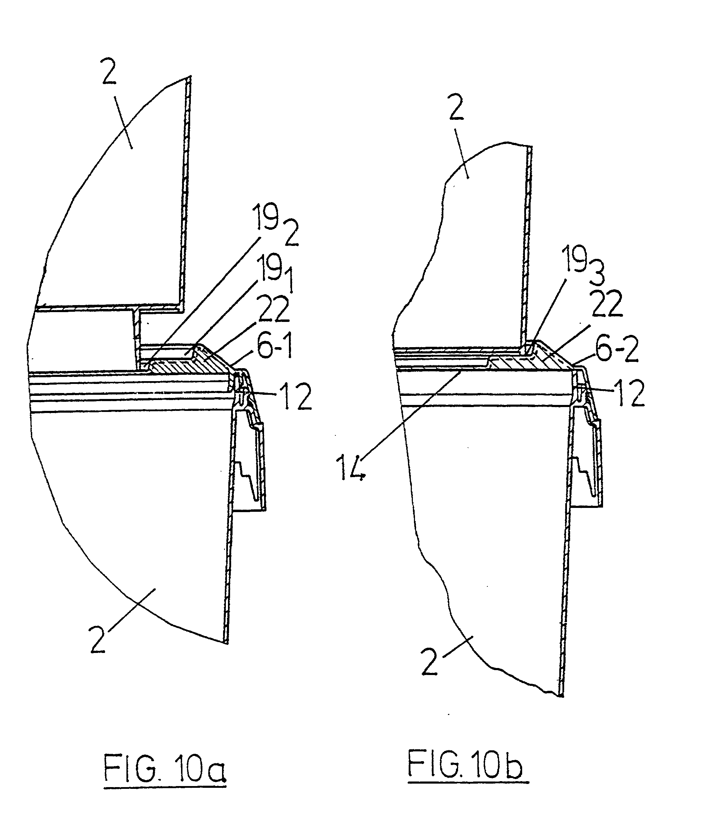

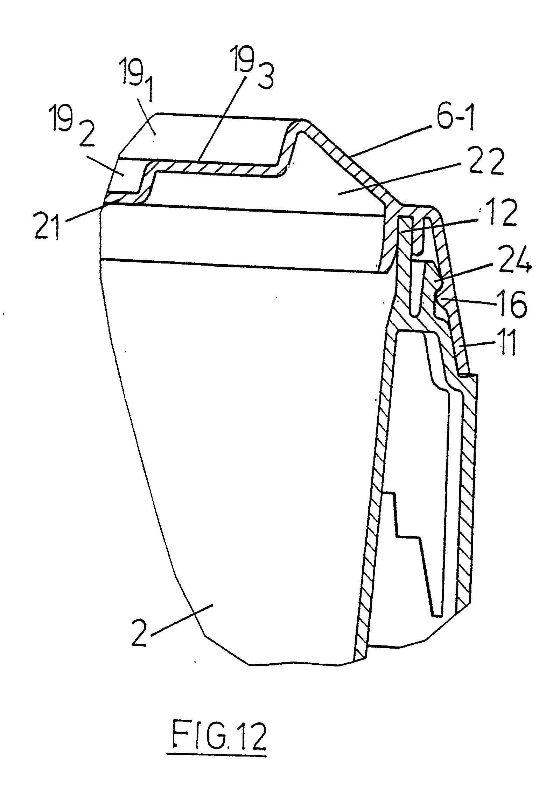

Fig. 2g zeigt eine alternative Stülpdeckelform. Bei diesem Stülpdeckel 6-2 ist die innen liegende Ringwand 19 stufenförmig ausgebildet mit zwei Wandabschnitten 19₁ und 19₂ mit unterschiedlichen Durchmessern. Dadurch wird ein ringförmiges Plateau 19₃ gebildet, das ein verschiebungssicheres Stapeln der Eimer bzw. Becher unterstützt (vgl. Fig. 10a und 10b). Auch bei dieser Deckelform sind Stützelemente 22 im U-förmigen Abschnitt des Randbereichs des Deckels ausgebildet, die sich an der oberen Ringkante/-fläche des darunterliegenden Deckels abstützen. Fig. 12 zeigt eine vergrößerte Teilansicht eines mit diesem Deckel (Dichtdeckel 6-1) verschlossenen Behälters.

Prinzipiell ist es auch möglich, einen Behälter mit Deckel entsprechend einer Kombination der vorstehend beschriebenen Varianten bereitzustellen.

Der Behälter 2 kann wahlweise bedruckt, mit einem Klebeetikett oder mit einem Inmold-Label versehen sein. Der Kopfbereich des Behälters 2 ist universell für die vorstehend beschriebenen Dicht- und Stülpdeckel 6-1 und 6-2 gleich ausgebildet. Es ist dabei anzumerken, daß die Halteeinrichtung 16 am Deckel 6 in der am Behälter 2 vorgesehenen Halteeinrichtung 24 eingreift, wie dies insbesondere in Figuren 1e und 2e erkennbar ist. Die am Behälter 2 gebildete Halteeinrichtung 24 ist vorzugsweise ein umlaufender Vorsprung oder eine Schnappnase. Beim Aufsetzen und Abnehmen des Deckels 6 wird dann die daran gebildete Halteeinrichtung 16 nach radial außen bewegt und hält den Dekkel durch den Eingriff mit der Halteeinrichtung 24 am Behälter fixiert oder gibt ihn frei. Die Halteeinrichtung 24 kann umlaufend, abschnittsweise oder stellenweise vorgesehen sein. Dadurch wird eine sichere Halterung des Deckels 6 am Behälter 2 gewährleistet. Der Dichtbereich 20 ist dabei vom Haltebereich 16/24 getrennt, so daß derselbe Behälter mit verschiedenen Deckeln 6-1 oder 6-2 verwendbar ist.

In den Figuren 1e und 2e ist darüber hinaus deutlich sichtbar, daß zwischen einer Außenwand 26 und einem nach außen umgestülpten oberen Randbereich 28 des Behälters 2 um dessen Umfang Versteifungsrippen 30 angeordnet sein können. Diese Vertiefungsrippen dienen vorzugsweise auch zum Abstützen der übereinander gestapelten Eimer bzw. Becher 2. Dazu weisen die Rippen 30 an ihrer Unterkante vorzugsweise eine Abstufung 31 auf, deren Stufen mit dem Dichtrand 12 und der Halteeinrichtung 24 des Behälters 2 beim Stapeln in Kontakt kommen. Diese Abstufung 31 ist auch für das Anbringen eines Etiketts und insbesondere für die Verwendung eines Inmold-Labels vorteilhaft, da dadurch das Label ausreichend weit unter den umgestülpten Bereich am oberen Rand des Eimers bzw. Bechers bringbar ist.

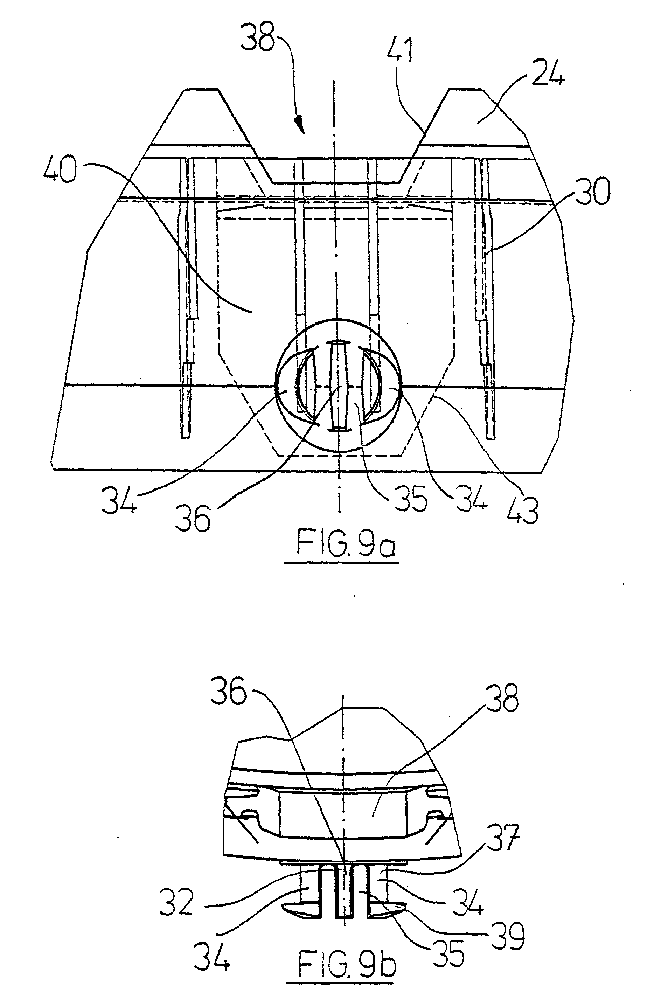

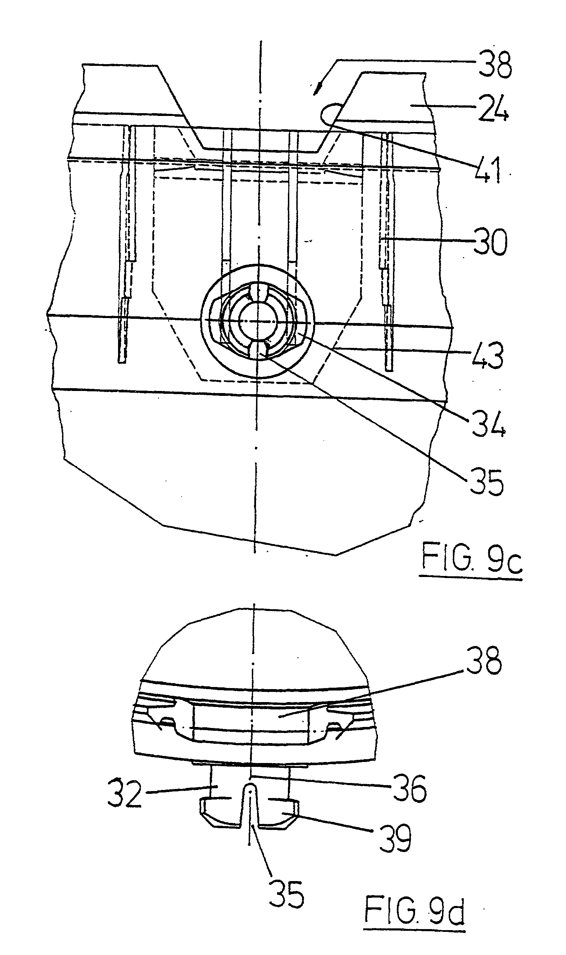

Zur Anlenkung des Henkels 4 am Behälter 2 sind vorzugsweise beidseitig am Behälter 2 zwei Scharnierzapfen 32 vorgesehen, wie sie detailliert in den Figuren 9a bis 9d dargestellt sind. Die Scharnierzapfen 32 werden vorzugsweise aus zwei Schnappnasen 34, die bei der Montage des Henkels 4 federnd nachgeben, ausgebildet. Zwischen den Schnappnasen 34 ist eine Freiraum 35 vorgesehen, in den die Schnappnasen 34 beim Zusammendrücken ausweichen.

Gemäß einer ersten Ausführungsform (Fign. 9a und 9b) ist mittig im Freiraum vorzugsweise ein Stützelement 36 vorgesehen, das eine Fortführung des Scharnierzapfens 32 bildet. Dieses Stützelement 36 überträgt im wesentlichen senkrecht wirkende Kräfte vom Henkel 4 auf den Behälter 2 und verhindert ein eventuelles unbeabsichtigtes Zusammendrücken der Schnappnasen 34 nach innen. Die Schnappnasen 34 weisen jeweils einen Federabschnitt 37 und einen daran radial außerhalb vorgesehenen Hakenabschnitt 39 auf. Zur Montage des Henkels 4 wird dieser über den vorzugsweise außen abgeschrägten Hakenabschnitt 39 geschoben und anschließend um den Scharnierzapfen 32 drehbar gehalten, indem die Innenseite des Hakenabschnitts 39 den Henkel 4 in Radialrichtung des Behälters 2 hält. Diese Anordnung hat außerdem den Vorteil, daß die einzelnen Partien dünnwandig ausgebildet werden. Dies erlaubt eine gute Herstellbarkeit unter Einhaltung von geforderten Maßtoleranzen.

Eine alternative Form des Scharnierzapfens 32 ist in den Figuren 9c und 9d gezeigt. Hier ist im Freiraum 35 kein separates Stützelement 36 vorgesehen. Am behälterseitigen Ende des Scharnierzapfens sind die beiden Schnappnasen 34 miteinander verbunden, so daß sich der Freiraum 35 nicht bis ganz zur Behälterwand erstreckt. Der Freiraum erstreckt sich bevorzugt über mindestens 50% des Bereichs des Zapfens 32, in dem der Henkel 4 abstützt. Die Schnappnasen 34 weisen einen Hakenabschnitt 39 auf, der vorzugsweise außen abgeschrägt ist. Die Schnappnasen sind in etwa sichelförmig ausgebildet, unterbrochen von dem nutförmigen Freiraum 35 (siehe Fig. 9c).

Die Ausbildung der Scharnierzapfen 32 am Behälter 2 ermöglicht insbesondere, daß im Zwischenraum zwischen dem Randbereich 28 und der Außenwand 26 des Behälters 2 ein zusätzlicher Raum für eine Verdrehsicherung entsteht. Dies ist üblicherweise nicht der Fall, weil die Scharnierzapfen am Henkel vorgesehen sind und durch Öffnungen im Behälter in diesen Zwischenraum hineinragen. Gleichwohl ist es auch beim erfindungsgemäßen Behälter 2 möglich, die Scharnieranordnung umzukehren, wobei dann die Verdrehsicherung auch außerhalb des Scharnierbereiches vorsehbar ist.

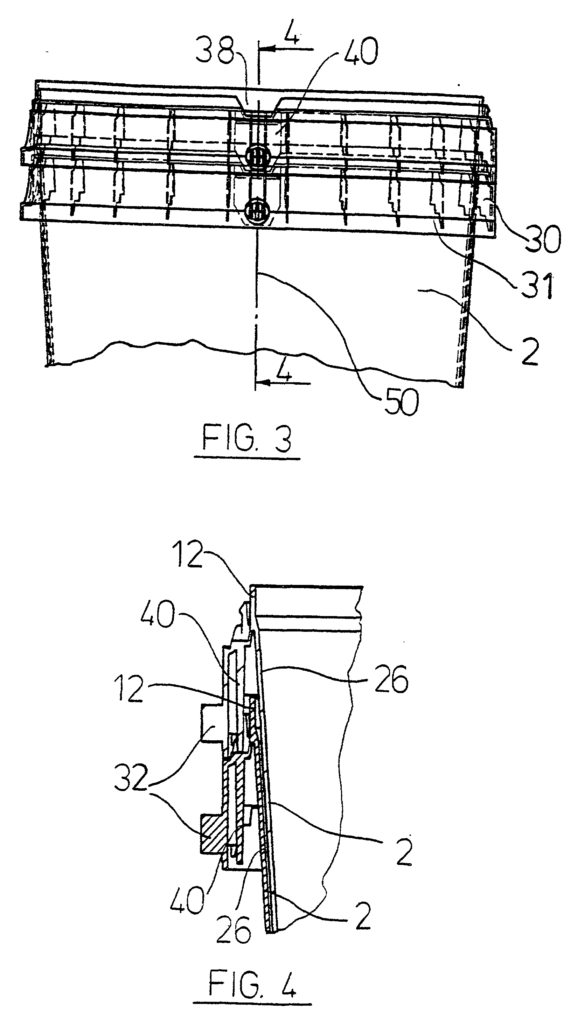

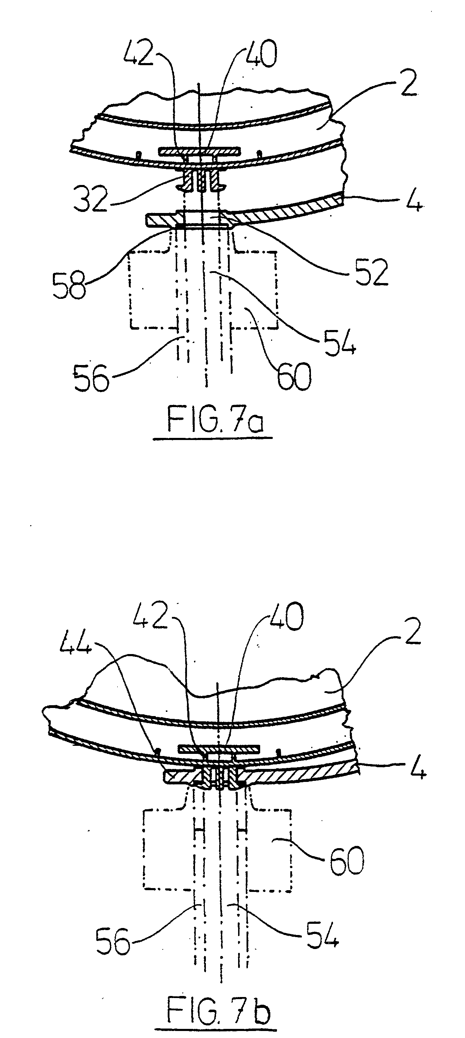

Die Figuren 3 und 4 zeigen die Stapelbarkeit des erfindungsgemäßen Behälters 2. Dabei sitzen, wie vorstehend beschrieben, die Rippen 30 auf dem Behälterrand eines darunterliegenden Behälters. Die Behälter 2 sind gegen Verdrehung im Stapel gesichert. Dazu ist im oberen Randbereich des Behälters, d.h. in der Halteeinrichtung 24 nicht aber im Dichtrand 12 eine Aussparung 38 vorgesehen, in die ein zwischen der Außenwand 26 und dem umgestülpten Bereich 28 gelegenes Sicherungselement 40 eingreift. Die Aussparung 38 und/oder das Sicherungselement 40 weisen/weist zumindest teilweise abgeschrägte oder abgerundete Abschnitte 41 bzw. 43 auf, so daß selbst wenn die Behälter 2 nicht exakt übereinander gestapelt werden, die Elemente der Verdrehsicherung 38 und 40 ineinander eingreifen, indem die schrägen oder abgerundeten Kanten 43 des Sicherungselements 40 entlang der Abschnitte 41 der Aussparung 38 gleiten. Die Aussparung 38 und/oder das Sicherungselement 40 verlaufen vorzugsweise symmetrisch zwischen vorzugsweise 30° und 60° konisch nach unten. Das Sicherungselement 40 kann beispielsweise, ähnlich wie in Fig. 7a und 7b gezeigt, durch mindestens einen Verbindungssteg 42 am Behälter 2 angebracht sein. Das Sicherungselement 40 kann vorzugsweise darüber hinaus durch mindestens eine der Versteifungsrippen 30 auf einer dem Steg 42 gegenüberliegenden Seite davon gestützt werden, wodurch eine Stabilisierung der Anordnung bei der Montage des Henkels 4 erzielbar ist. Vorzugsweise erstreckt sich die Abschrägung oder Rundung 41 an der Aussparung 38 über ihre gesamte Tiefe, während am Sicherungselement 40 lediglich die Ecken großzügig abgeschrägt bzw. gerundet sind. Die Verdrehsicherung hat den Vorteil, daß die Behälter in einer bestimmten Position zueinander stapelbar sind, wobei die montierten Henkel 4, die aus Gründen der Übersichtlichkeit in diesen Figuren nicht dargestellt sind, in der vorgegebenen Position übereinander angeordnet sind. Wie nachfolgend noch näher erläutert wird, ist dadurch eine exakte Handhabung für die weiteren Arbeitsgänge sichergestellt.

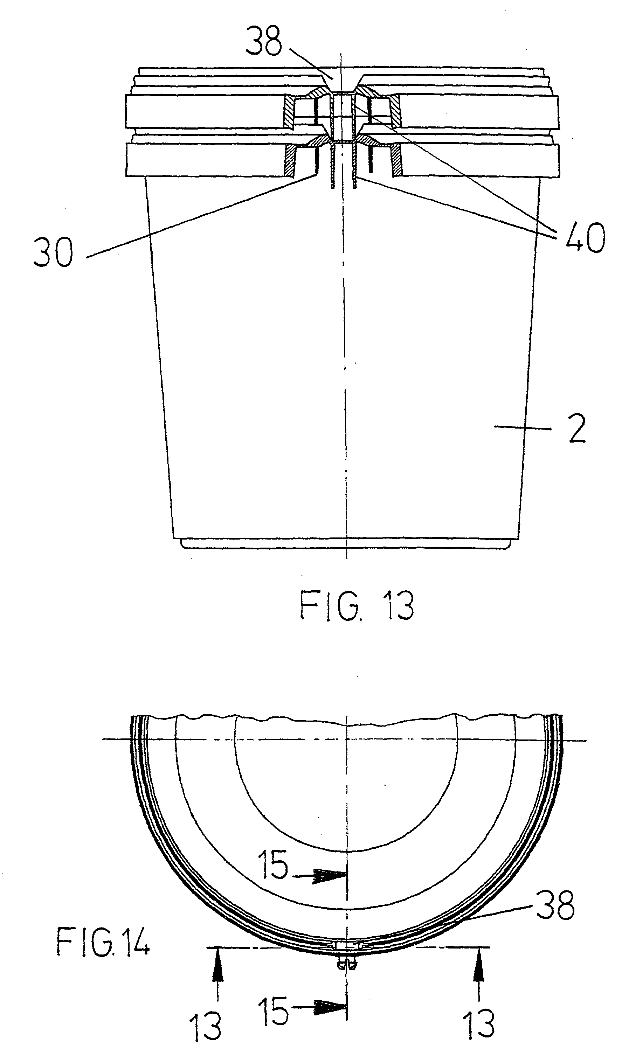

Figuren 13-15 zeigen eine Verdrehsicherung gemäß einer alternativen Ausführungsform. Das in Fig. 3 und 4 gezeigte Schwert 40 ist hier durch zwei Wände 40 ersetzt. Diese Wände bzw. Stege erstrecken sich im wesentlichen senkrecht zur Behälterwand 26 zwischen der Behälterwand und dem umgestülpten Bereich 28. Somit sind die Stege 40 ähnlich zu den Rippen 30 ausgebildet, erstrecken sich jedoch weiter nach unten (vgl. Fig. 13), so daß sie in die Aussparung 38 eines darunter befindlichen Behälters zur Verdrehsicherung eingreifen.

Die am Markt befindlichen Behälterhenkel haben jeweils ein halbrundes Ende, das zentriert um den Scharnierzapfen ausgebildet ist. Im Gegensatz dazu ist beim erfindungsgemäßen Behälter 2 ein Mitnehmer 44 vorgesehen, durch den der Henkel 4 in Zusammenwirken mit einem Handhabungssystem in einer zur Längsachse 50 des Behälters senkrechte Stellung bringbar ist. Der Mitnehmer 44 ist beispielsweise ein über den Drehpunkt des Henkels 4 hinausragender Abschnitt, an dem das Handhabungssystem angreifen kann. Der Mitnehmer 44 kann beispielsweise als Hebel, Aussparung, Vorsprung oder ähnliches ausgebildet sein. Vorzugsweise weist der erfindungsgemäße Behälter 2 einen Henkel 4 auf, der über den Scharnierzapfen 32 hinaus in seiner Längsrichtung um einen Verlängerungsabschnitt 44 vorzugsweise parallel verlängert ist. Durch die Ausrichtung des Henkels mit Hilfe des Handhabungssystems kann vermieden werden, daß sich beim Entnehmen des obersten Behälters 2 aus einem Stapel der Henkel 4 mit einem oder mehreren darunterliegenden Behältern verhakt, was zu Betriebsstörungen, z.B. beim Abfüllen, führen würde.

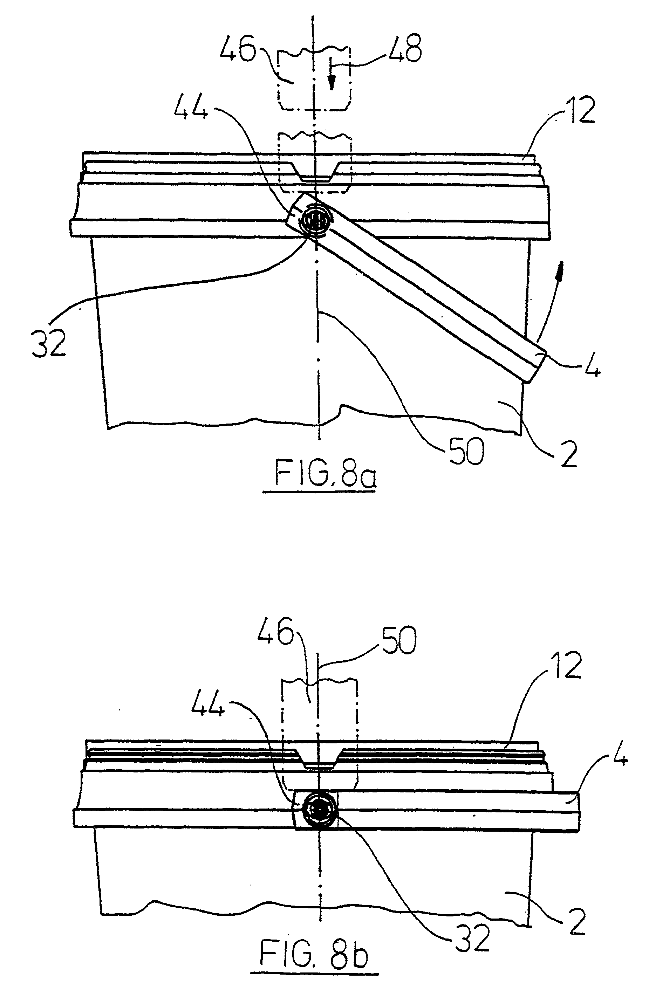

Aufgrund eines Verlängerungsabschnitts 44, der mindestens an einem der Enden des Henkels 4 vorgesehen ist, ist es möglich, ein Handhabungssystem derart auszugestalten, daß ein Ausrichtelement 46 auf den Verlängerungsabschnitt 44 wirkt. Ein solches Ausrichtelement 46 ist beispielsweise in den Figuren 8a und 8b mit einer strichpunktierten Linie dargestellt. Das Ausrichtelement 46 ist beispielsweise ein gefedertes Ausrichtteil, das in das Handhabungssystem integriert ist. Zum Handhaben eines gestapelten erfindungsgemäßen Behälters 2 trifft das Ausrichtelement 46, wie in Fig. 8a dargestellt, bei einer vertikalen Bewegung entlang des Pfeiles 48 zunächst auf den schräg nach oben weisenden Verlängerungsabschnitt 44 des Henkels 4. Wird das Ausrichtelement 46 weiter in Pfeilrichtung 48 bewegt, so bewegt sich der Henkel 4 gezwungenermaßen in eine zur Längsachse 50 des Behälters 2 senkrechte Position. Damit ist die Gefahr, daß sich der Henkel 4 des obersten Behälters mit einem darunterliegenden Behälter verhakt, ausgeschlossen, und eine problemlose Handhabung der erfindungsgemäßen Behälter 2 ist gewährleistet.

Obwohl vorstehend das Handhabungssystem anhand eines stehenden Behälters beschrieben wurde, kann man das gleiche Prinzip auch beispielsweise zum Bedrucken oder Etikettieren des erfindungsgemäßen Behälters 2 mit horizontaler Längsachse 50 anwenden. Dabei ergibt sich insbesondere der Vorteil, daß der frei bewegliche Henkel von der zu bearbeitenden Fläche sicher weggehalten werden kann.

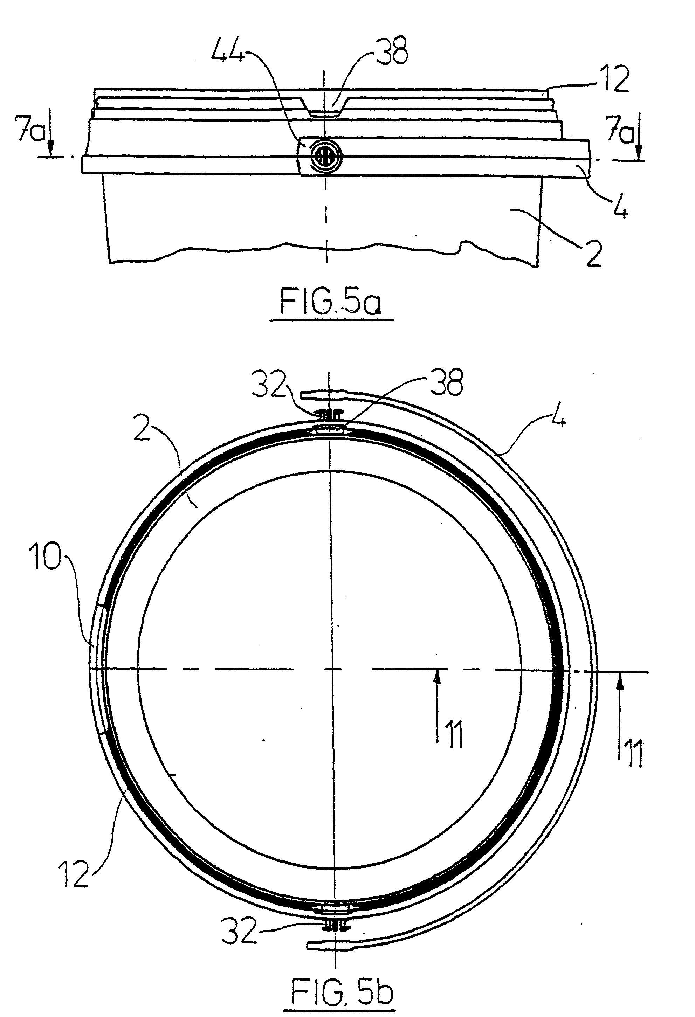

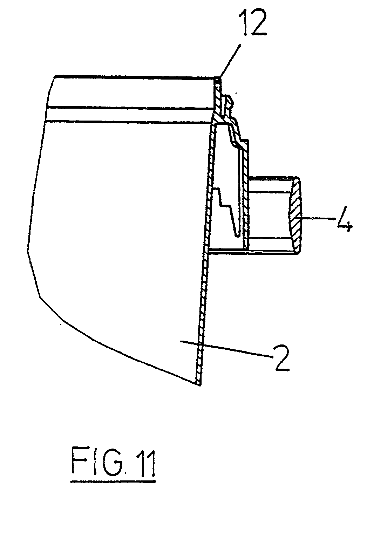

Wie in Fig. 11 gezeigt weist der Henkel 4 des erfindungsgemäßen Behälters 2 vorzugsweise eine Rauten- bzw. Drachenform auf. Dies erleichtert die Herstellung des Spritzgießwerkzeugs sowie das Entformen. Ferner weist der Henkel 4 im Bereich der Öffnungen 52 vorzugsweise an beiden Seiten einen vorzugsweise ringförmigen Vorsprung auf (vgl. Fig. 5b). Innen dient der Vorsprung als Abstandshalter zum Behälter und außen deckt der Vorsprung den Freiraum 35 des Scharnierzapfens 32 ab.

Der Behälter 2 der vorliegenden Erfindung ist vorzugsweise ein spritzgegossener Kunststoffeimer oder -becher, der in einer Spritzgießmaschine mit einer Spritzgießform hergestellt wird, wobei der am Behälter 2 vorgesehene Henkel 4 in einem Arbeitsgang zusammen mit dem Behälter 2 gespritzt und montiert wird. Dazu ist die Vorrichtung zum Herstellen bzw. die Spritzgießform, wie insbesondere aus Figur 5b erkennbar, derart ausgebildet, daß der Behälter 2 und der Henkel 4 so in der Spritzgießform liegen, daß beim Entformen der Henkel 4 automatisch am Behälter 2 montierbar ist. Insbesondere ist es vorteilhaft, wenn der Henkel 4 sich im wesentlichen um den halben Umfang des Behälters 2 erstreckt, wobei der Henkel im wesentlichen senkrecht zur Längsachse 50 des Behälters 2 in der Form vorgesehen ist und die Öffnungen 52 an den Endabschnitten des Henkels 4 mit den Scharnierzapfen 32 fluchten. Es ist nämlich dann entsprechend der Figuren 7a bis 7d auf besonders einfache Weise möglich, den Henkel 4 am Behälter 2 während des Entformens zu montieren. Dazu ist vorzugsweise in der Spritzgießform ein Formkern 54 vorgesehen, der die Öffnungen 52 am Henkel 4 ausbildet. Der Formkern 54 dient bei der Montage während des Entformens als Führung für den Henkel 4 selbst, damit dieser exakt zu und über die Schnappnasen 34 am Scharnierzapfen 32 geführt werden kann. Darüber hinaus weist die Spritzgießform eine Formhülse 56 auf, die einerseits eine abgesetzte Aussparung 58 in der Henkelnabe ausbildet und andererseits als Führung einer Montagehülse 60 dient. Die Montagehülse 60 drückt beim Öffnen der Form den Henkel 4 auf die Scharnierzapfen 32, wie in Fig. 7b dargestellt.

Die Montage beim Entformen kann beispielsweise dadurch geschehen, daß nach dem Spritzen zuerst die äußere Form entfernt wird, so daß das Äußere des Behälters 2 sowie ein Teil des Henkels 4 frei liegen. In einem nächsten Schritt oder gleichzeitig wird der Behälter 2 und der Henkel 4 so weit entformt, daß der innere Formkern im wesentlichen im Behälterinneren verbleibt, aber die Scharnierzapfen 32 am Behälter freiliegen. Der Henkel 4 wird dann mittels des Formkerns 54, der Formhülse 56 und der Montagehülse 60 montiert. Schließlich wird dann der innere Formkern, der zur Stabilisierung des Behälters 2 während der Montage dient, entfernt.

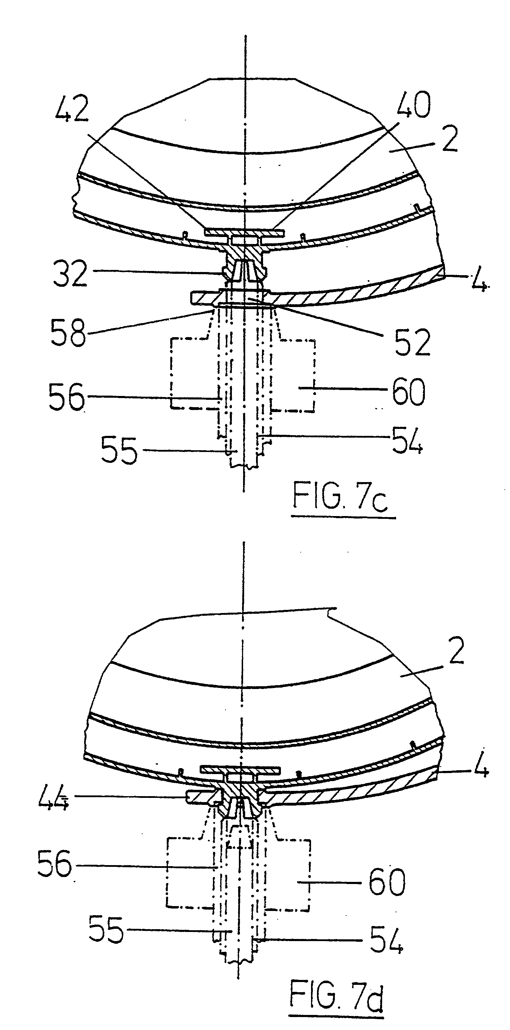

Zum Formen der Scharnierzapfen 32 gemäß Figuren 9c und 9d weist der Formkern 54 für die Henkelöffnungen einen weiteren - dazu im Inneren konzentrisch angeordneten - Formkern 55 auf. Dieser ragt beim Spritzgießen in den Scharnierzapfen 32 hinein, um so die Innenfläche der sichelförmigen Schnappnasen 34, d.h. den kegelstumpfförmigen Freiraum 35 zu bilden (vgl. Fig. 7c und 7d).

Vor dem Anbringen des Henkels an den Scharnierzapfen 32 wird der Formkern 55 innerhalb des Formkerns 54 zurückgezogen, um den Schnappnasen 34 zu ermöglichen, sich beim Aufschieben des Henkels nach innen zu biegen. Dies ist in Fig. 7d gezeigt.

Der Behälter 2 selbst ist durch einen Austauscheinsatz in der Spritzgießform wahlweise als Behälter mit Originalitätsschutz 8 oder mit offener Griffmulde 10 herstellbar. Somit lassen sich mit der erfindungsgemäßen Spritzgießform beide vorstehend beschriebenen Behälterarten gemäß den Figuren 1 und 2 spritzen.

Ferner ist es möglich, auf einer Zwei-Farben-Spritzmaschine den Henkel 4 und den Behälter 2 in verschiedenen Farben und/oder aus verschiedenen Materialien gemeinsam zu fertigen.

Die spritzgegossenen Behälter mit montiertem Henkel werden vorteilhafterweise nach der Herstellung gestapelt (Figur 3), wie dies auch mit den Deckeln entsprechend den Figuren 1f und 2f geschieht.

Fig. 10a zeigt einen Ausschitt zweier übereinandergestapelter Becher mit Dichtdeckel 6-1. Wie in Fig. 10a zu sehen, weisen die erfindungsgemäßen Becher eine erste Bodengestaltung, vorzugsweise mit einem Fuß auf, der auf dem abgesetzten Mittelbereich 21 steht. Der gestufte Wandabschnitt 19 stellt eine gestufte Stapelsicherung bereit, die ein Verschieben des oberen Bechers relativ zum darunter befindlichen Becher verhindert oder zumindest beschränkt. Werden Becher oder Eimer mit einer zweiten Bodengestaltung ohne entsprechenden Fuß gestapelt (vgl. Fig. 10b), ruht die Unterseite des Bechers/Eimers auf dem ringförmigen Plateau und ist auch dort gegen Verrutschen gesichert. Somit kann eine einzige Deckelform für Becher/Eimer mit oder ohne Fuß verwendet werden.

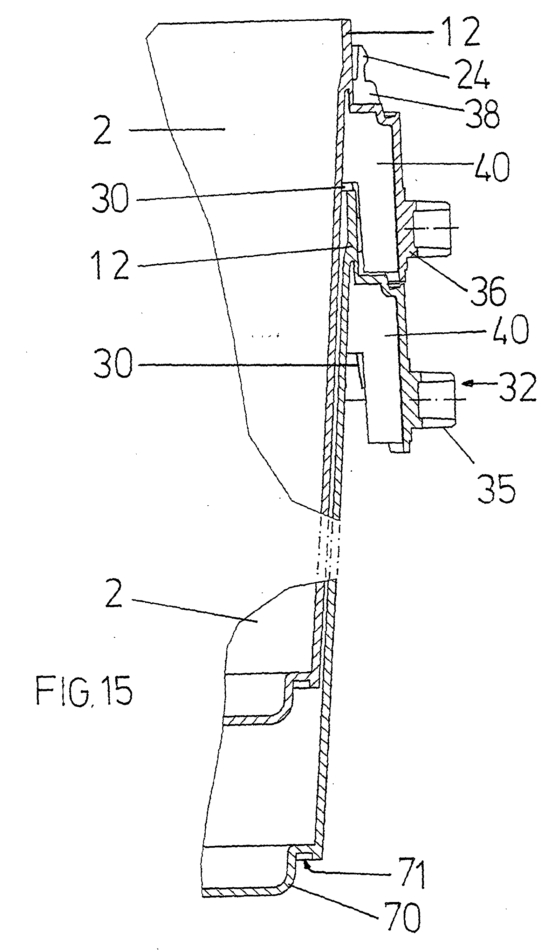

Figur 15 zeigt eine weitere alternative Bodengestaltung. Der Übergang von Behälterboden / Fuß 70 zur Behälteraußenwand befindet sich nicht am untersten Rand der Behälteraußenwand, sondern ist etwas nach innen zurückgesetzt, so daß ein Überstand entsteht. Der Behälterboden verläuft zunächst in einer Ebene senkrecht zur Behälterachse, bildet jedoch dann einen über den unteren Rand der Behälteraußenwand hinausragenden Fuß aus. Dadurch entsteht zwischen Fuß und Überstand eine konzentrische Nut 71.

Die Becher können mit oder ohne Henkel und in verschiedenen Größen bereitgestellt werden, beispielsweise gemäß folgender Tabelle:

**Tabelle 1**

| **Durchmesser oben (mm)** | **Becherinhalt (ml)** | | | |
|---|---|---|---|---|
| 77 | 125 | < 200 | 200 | 250 |
| 96 | 250 | 400 | 500 | |
| 109 | 250 | 400 | 500 | 750 |
| 120 | 500 | 750 | 1000 | |

Für alle Becher einer Zeile von Tabelle 1 kann dieselbe Dekkelgröße verwendet werden, da Fuß und oberer Durchmesser für alle Bechergrößen gleich ist. Entsprechendes gilt für Eimer, die jedoch ein größeres Fassungsvermögen aufweisen (beispielsweise 1, 5 und 10 Liter).

## Patentansprüche

1. Stapelbarer Behälter (2) mit Verdrehsicherung (38, 40) gegen Verdrehen gestapelter Behälter relativ zueinander, wobei die Verdrehsicherung in Form einer Aussparung (38) am oberen Rand des Behälters und einem damit in Eingriff bringbaren Sicherungselement (40) gebildet ist, **dadurch gekennzeichnet, daß** das Sicherungselement (40) an einer der Aussparung gegenüberliegenden Seite des oberen Behälterrandes im Zwischenraum zwischen der Behälteraußenwand (26) und einem umgestülpten oberen Randbereich (28) ausgebildet ist, so daß beim Stapeln ein erster, oberer Behälter (2) mit seinem Sicherungselement (40) in die Aussparung (38) eines zweiten, unteren Behälters (2) eingreift, wobei das Sicherungselement (40) und/oder die Aussparung (38) beidseitig abgeschrägt und/oder abgerundet sind, um ein leichteres Eingreifen der Elemente der Verdrehsicherung ineinander zu ermöglichen.

2. Behälter (2) nach Anspruch 1, wobei die Verdrehsicherung (38, 40) nach unten vorzugsweise zwischen 30° und 60° symmetrisch konisch verläuft.

3. Behälter (2) nach Anspruch 1 und 2, wobei ein am Behälter (2) anbringbarer Henkel (4) zusammen mit dem Behälter (2) in einem Arbeitsgang spritzgießbar und montierbar ist.

4. Behälter (2) nach Anspruch 1, 2 oder 3 mit einem Dichtdeckel (6-1), der eine Halteeinrichtung (16) aufweist, die mit einer Halteeinrichtung (24) am Behälter (2) im Eingriff bringbar ist, und wobei ein von der Halteeinrichtung (24) unabhängiger und umlaufender Dichtbereich (12) am Oberrand des Behälters (2) ausgebildet ist, der mit einem Dichtbereich (20) des Dichtdeckels (6-1) in Eingriff bringbar ist.

5. Behälter (2) nach Anspruch 1, 2 oder 3 mit einem Stülpdeckel (6-2), der eine Halteeinrichtung (16) aufweist, die mit einer Halteeinrichtung (24) am Behälter (2) in Eingriff bringbar ist, und wobei im Abstand von der Halteeinrichtung (24) ein umlaufender Oberrand des Behälters (2) ausgebildet ist, der mit einer Siegelfolie (14) verschließbar ist.

6. Behälter nach Anspruch 4 oder 5, wobei der Deckel (6-1, 6-2) einen von einer äußeren Umfangswand (11), einer Ringfläche (17) und einer Ringwand (19) gebildeten umlaufenden Rand aufweist, wobei sich die Ringwand (19) radial innerhalb der Ringfläche (17) erstreckt.

7. Behälter nach Anspruch 6, wobei der umlaufende Rand ein im wesentlichen U-förmiges Querschnittsprofil aufweist.

8. Behälter nach Anspruch 6, wobei die Ringwand (19) stufenförmig ausgebildet ist und zwischen zwei Wandabschnitten (19₁, 19₂) eine ringförmige und zur Behälterachse senkrecht liegende Fläche (19₃) vorhanden ist.

9. Behälter nach Anspruch 8, wobei die stufenförmige Ringwand (19)unterschiedliche Bodengestaltungen des Behälters (2) zentrierend aufnimmt und gegen Verrutschen sichert.

10. Behälter nach einem der Ansprüche 7 bis 9, wobei innerhalb des umlaufenden Randes des Deckels (6-1, 6-2) oder sich vom umlaufenden Rand radial nach innen erstreckend mindestes ein Stützelement (22) vorgesehen ist.

11. Behälter (2) nach einem der Ansprüche 4 bis 10, wobei die Verdrehsicherung in Form einer Aussparung (38) am oberen Rand des Behälters und einem damit in Eingriff bringbaren Sicherungselement (40) gebildet ist, das an einer der Aussparung gegenüberliegenden Seite des oberen Behälterrandes ausgebildet ist, so daß beim Stapeln ein erster, oberer Behälter (2) mit seinem Sicherungselement (40) in die Aussparung (38) eines zweiten, unteren Behälters (2) eingreift, wobei das Sicherungselement (40) und/oder die Aussparung (38) beidseitig abgeschrägt und/oder abgerundet sind, um ein leichteres Eingreifen der Elemente der Verdrehsicherung ineinander zu ermöglichen.

12. Behälter (2) nach Anspruch 1, 2 oder 11, wobei das Sicherungselement (40) mit mindestens einem Steg (30, 42) an einem Außenrand (28) des Behälters (2) und/oder an der Behälterwand (26) befestigt ist.

13. Behälter (2) nach Anspruch 12, wobei der Steg (30, 42) derart ausgebildet ist, daß das Sicherungselement (40) daran stabil fixierbar ist.

14. Behälter (2) nach einem der Ansprüche 4 bis 10, wobei die Verdrehsicherung in Form einer Aussparung (38) am oberen Rand des Behälters und einem damit in Eingriff bringbaren Sicherungselement (40) gebildet ist, das an einer der Aussparung gegenüberliegenden Seite des oberen Behälterrandes ausgebildet ist, so daß beim Stapeln ein erster, oberer Behälter (2) mit seinem Sicherungselement (40) in die Aussparung (38) eines zweiten, unteren Behälters (2) eingreift, wobei das Sicherungselement (40) aus zwei Stegen gebildet ist, die sich zwischen Behälterwand (26) und einer Außenwand (28) des Behälters (2) erstrecken.

15. Behälter (2) nach einem der Ansprüche 3 bis 14, wobei die Verdrehsicherung (38, 40) in einem Scharnierbereich (32) des Henkels (4) vorgesehen ist.

16. Behälter (2) nach einem der Ansprüche 1 bis 15, wobei am oberen Behälterrand eine Halteeinrichtung (24) für einen Deckel (6) vorgesehen ist.

17. Behälter (2) nach Anspruch 16, wobei die Halteeinrichtung (24) zum Halten des Deckels (6) mit mindestens einer Haltenase versehen ist.

18. Behälter (2) nach einem der Ansprüche 10 bis 17, wobei zum Stapeln der Behälter (2) zwischen der Behälterwand (26) und dem Außenrand (28) ein eine Abstufung (31) aufweisendes Versteifungselement (30) vorgesehen ist, dessen Stufen der Form des Oberrandes des Behälters (2) entsprechen.

19. Behälter (2) nach einem der Ansprüche 16 bis 18, wobei die Halteeinrichtung (24) umlaufend vorgesehen ist.

20. Behälter (2) nach einem der Ansprüche 1 bis 19, wobei der Deckel (6) derart auf dem Behälter (2) sitzt, daß ein äußerer Umfangsabschnit (11) mit seinem unteren Randbereich (13) auf oder an einem am Behälter (2) gebildeten umlaufenden Kragen (15) sitzt, so daß der Deckel (6) nicht ohne vorheriges Entfernen eines Originalitätsschutzes (8) abgenommen werden kann, weil zwischen Behälter (2) und Deckel (6) keine Eingriffsmöglichkeit besteht.

21. Behälter (2) nach einem der Ansprüche 3 bis 20, wobei der Henkel (4) einen Mitnehmer (44) aufweist, der derart ausgebildet ist, daß in Zusammenspiel mit einem Handhabungssystem der Henkel (4) im wesentlichen senkrecht zu einer Längsachse (50) des Behälters (2) ausrichtbar ist.

22. Behälter (2) nach Anspruch 21, wobei der Henkel (4) mindestens einen über seinen Drehpunkt in Henkellängsrichtung hinausragenden Abschnitt (44) aufweist, der zur Handhabung des Behälters (2) mit einer Einrichtung (46) in Kontakt bringbar ist, um den Henkel (4) im wesentlichen senkrecht zur Behälterlängsachse (50) auszurichten.

23. Behälter nach einem der Ansprüche 1 bis 22, wobei Scharnierzapfen (32) vorgesehen sind, die je zwei durch einen Freiraum (35) getrennte Schnappnasen (34) aufweisen.

24. Behälter nach Anspruch 23, wobei im Freiraum (35) ein Stützelement (36) vorgesehen ist.

25. Behälter nach Anspruch 24, wobei die Schnappnasen (34) im wesentlichen sichelförmig sind.

26. Behälter nach einem der Ansprüche 1 bis 25, wobei der Behälter ein Eimer ist.

27. Behälter nach einem der Ansprüche 1 bis 25, wobei der Behälter ein Becher ist.

28. Verfahren zum Handhaben eines Behälters (2) nach Anspruch 21 oder 22, wobei eine Einrichtung (46) in einem Handhabungssystem mit einem über den Drehpunkt des Henkels (4) in seine Längsrichtung hinausragenden Abschnitt (44) in Kontakt gebracht wird, so daß der Henkel (4) im wesentlichen senkrecht zur Längsachse des Behälters (2) ausgerichtet und gehalten wird.

29. Verfahren zur Herstellung von Kunststoffbehältern (2) mit Henkel (4) nach einem der Ansprüche 3 bis 22, in einer Spritzgießform, wobei der Behälter (2) mit dem Zwischenraum zwischen der Behälterwand (26) und einem umgestülpten oberen Randbereich (28) angeordneten Sicherungselement (40) und der Henkel (4) in einem Arbeitsgang gemeinsam gespritzt werden und beim Entformen der Henkel automatisch am Behälter (2) montiert wird.

30. Verfahren nach Anspruch 29, wobei zur Montage des Henkels (4) am Behälter (2) ein Formkern (54) der Gießform zum Ausbilden einer Öffnung (52) am Henkel (4) als Führung dient, um den Henkel (4) an am Behälter (2) ausgebildeten Scharnierzapfen (32) zu befestigen, in dem eine von einer Formhülse (56) geführte Montagehülse (60) beim Entformen die Öffnung (52) im Henkel (4) über den Scharnierzapfen (32) drückt.

31. Verfahren nach Anspruch 30, wobei der Formkern (54) im inneren einen verschiebbaren Formkern (55) aufweist, um die Innenflächen der Scharnierzapfen (32) zu bilden.

32. Verfahren nach Anspruch 29, 30 oder 31, wobei Henkel (4) und Behälter (2) in verschiedenen Farben und/oder aus verschiedenen Materialien in einer Gießform gleichzeitig gespritzt werden.

33. Verfahren nach einem der Ansprüche 29 bis 32, wobei der Behälter (2) bedruckt, mit einem Etikett und/oder einem Inmold-Label versehen wird.

## Claims

1. A stackable container (2) with a distortion preventing means (38, 40) to prevent distortion of stacked containers relatively with respect to each other, wherein the distortion preventing means is formed as a recess (38) at the upper rim of the container and a safety element (40) engageable therewith, **characterized in that** the safety element (40) is formed at a side of the upper rim of the container lying opposite to the recess in the space between the outer wall (26) of the container and a turned-up upper rim portion (28) so that during stacking the safety element (40) of a first, upper container (2) engages with the recess (38) of a second, lower container (2), wherein the safety element (40) and/or the recess (38) are beveled and/or rounded on both sides in order to allow the elements of the distortion preventing means to easily engage with each other.

2. The container according to claim 1, wherein the distortion preventing means (38, 40) extends downwardly preferably between 30° and 60° symmetrically conically.

3. The container (2) according to claims 1 and 2, wherein a handle (4) which is connectable with the container (2) can be injection-molded and mounted in one working step together with the container (2).

4. The container (2) according to claim 1, 2 or 3 comprising a sealing lid (6-1) having a holding means (16) which is engageable with the holding means (24) of the container (2) and wherein a circumferential sealing portion (12) which is independent of the holding means (24) is formed at the upper rim of the container (2), said sealing portion (12) being engageable with a sealing portion (20) of the sealing lid (6-1).

5. The container (2) according to claim 1, 2 or 3 comprising a hooded lid (6-2) comprising a holding means (16) which is engageable with the holding means (24) of the container (2) and wherein a circumferential upper rim of the container (2), which is closable by means of a sealing film (14), is spaced apart from the holding means (24).

6. The container according to claim 4 or 5, wherein the lid (6-1, 6-2) has a circumferential rim formed by an outer circumferential wall (11), a ring surface (17) and a ring wall (19), wherein the ring wall (19) extends radially inside the ring surface (17).

7. The container according to claim 6, wherein the circumferential rim comprises an essentially U-shaped cross-sectional profile.

8. The container according to claim 6, wherein the ring wall (19) is stepped and between two wall portions (19₁, 19₂) there is a ring-shaped surface (19₃) extending vertically with respect to the axis of the container.

9. The container according to claim 8, wherein the stepped ring wall (19) receives differently shaped bottoms of the container (2) in a centered manner and secures them against slippage.

10. The container according to any one of claims 7 to 9, wherein at least one support element (22) is provided inside the circumferential rim of the lid (6-1, 6-2) or extends radially inwardly with respect to the circumferential rim.

11. The container (2) according to any one of claims 4 to 10, wherein the distortion preventing means is formed as a recess (38) at the upper rim of the container and a safety element (40) engageable therewith, said safety element (40) being formed at a side of the upper rim of the container lying opposite to the recess so that during stacking the safety element (40) of a first, upper container (2) engages with the recess (38) of the second, lower container (2), wherein the safety element (40) and/or the recess (38) are beveled and/or rounded on both sides in order to allow the elements of the distortion preventing means to easily engage with each other.

12. The container (2) according to claim 1, 2, or 11, wherein the safety element (40) is attached with at least one web (30, 42) at an outer rim (28) of the container (2) and/or at the container wall (26).

13. The container (2) according to claim 12, wherein the web (30, 42) is formed such that the safety element (40) can be fixed thereon in a stable manner.

14. The container (2) according to any one of claims 4 to 10, wherein the distortion preventing means is formed as a recess (38) at the upper rim of the container and a safety element (40) engageable therewith, said safety element (40) being formed at a side of the upper rim of the container lying opposite to the recess so that during stacking the safety element (40) of a first, upper container (2) engages with the recess (38) of the second, lower container (2), wherein the safely element (40) is formed of two webs extending between the container wall (26) and an outer wall (28) of the container (2).

15. The container (2) according to any one of claims 3 to 14, wherein the distortion preventing means (38, 40) is provided in a hinge portion (32) of the handle (4).

16. The container (2) according to any one of claims 1 to 15, wherein a holding means (24) for a lid (6) is provided at the upper rim of the container.

17. The container (2) according to claim 16, wherein the holding means (24) for holding the lid (6) comprises at least one holding nose.

18. The container (2) according to any one of claims 10 to 17, wherein for the purpose of stacking the containers (2) a stiffening element (30) comprising a step (31) is provided between the container wall (26) and the outer rim (28), the step of the stiffening element (30) corresponding to the shape of the upper rim of the container (2).

19. The container (2) according to any one of claims 16 to 18, wherein the holding means (24) is circumferential.

20. The container (2) according to any one of claims 1 to 19, wherein the lid (6) is positioned such on the container (2) that the tower rim portion (13) of an outer circumferential portion (11) is positioned on or at a circumferential collar (15) formed on the container (2), so that the lid (6) cannot be removed without first removing an originality seal (8) because no engagement is possible between container (2) and lid (6).

21. The container (2) according to any one of claims 3 to 20, wherein the handle (4) comprises a catch (44) which is formed such that in cooperation with a handling system the handle (4) can be aligned essentially perpendicularly with respect to a longitudinal axis (50) of the container (2).

22. The container (2) according to claim 21, wherein the handle (4) comprises at least one portion (44) which extends beyond the point of distortion of the handle in its longitudinal direction and which can be brought in contact with a means (46) of the container (2) for the purpose of handling in order to align the handle (4) essentially vertically with respect to the longitudinal axis (50) of the container.

23. The container according to any one of claims 1 to 22, wherein hinge pivots (32) each comprising two snap noses (34) being separated by a space (35) are provided.

24. The container according to claim 23, wherein a support element (36) is provided in the space (35).

25. The container according to claim 24, wherein the snap noses (34) are essentially sickle shaped.

26. The container according to any one of claims 1 to 25, wherein the container is a bucket.

27. The container according to any one of claims 1 to 25, wherein the container is a cup.

28. A method for handling a container (2) according to claim 21 or 22, wherein in a handling system a means (46) is brought in contact with a portion (44) extending beyond the point of distortion of the handle (4) in its longitudinal direction so that the handle (4) is aligned and held essentially perpendicularly with respect to the longitudinal axis of the container.

29. A method for producing plastic containers (2) comprising a handle (4) according to any one of claims 3 to 22 in an injection mold, wherein the container (2) with the safety element (40) arranged in the space between the container wall (26) and a turned-up upper rim portion (28) and the handle (4) are injection-molded together in one working step, and when being removed from the mold the handle is automatically mounted at the container (2).

30. The method according to claim 29, wherein for mounting the handle (4) at the container (2) a mold core (54) of the mold for forming an opening (52) at the handle (4) is used as a guide element in order to mount the handle (4) at hinge pivots (32) formed at the container (2) in that during removal from the mold a mounting sleeve (60) guided by a mold sleeve (56) presses the opening (52) in the handle (4) over the hinge pivot (32).

31. The method according to claim 30, wherein a movable mold core (55) is arranged in the mold core (54) in order to form the inner surfaces of the hinge pivots (32).

32. The method according to claim 29, 30 or 31, wherein handles (4) and containers (2) having different colors and/or being made of different materials are simultaneously injection-molded in one injection mold.

33. The method according to any one of claims 29 to 32, wherein the container (2) is printed on, provided with a label and/or an inmotd label.

## Revendications

1. Conteneur empilable (2) avec une sûreté contre la rotation (38, 40) de conteneurs empilés les uns par rapport aux autres, la sûreté contre la rotation ayant la forme d'une encoche (38) sur le bord supérieur du conteneur et d'un élément de sûreté (40) pouvant être mis en prise avec celle-ci, **caractérisé en ce que** l'élément de sûreté (40) est conformé sur un côté du bord supérieur du conteneur opposé à l'encoche dans l'espace intermédiaire entre la paroi extérieure (26) du conteneur et une région supérieure (28) du bord non recouverte de sorte que, lors de l'empilage, un premier conteneur (2) supérieur s'engage avec son élément de sûreté (40) dans l'encoche (38) d'un deuxième conteneur (2) inférieur; l'élément de sûreté (40) et / ou l'encoche (38) étant chanfreiné et / ou arrondi des deux côtés pour permettre un engagement plus facile des éléments de la sûreté contre la rotation l'un dans l'autre.

2. Conteneur (2) selon la revendication 1, dans lequel la sûreté contre la rotation (38, 40) s'étend de manière symétriquement conique vers le bas, de préférence, entre 30° et 60°.

3. Conteneur (2) selon la revendication 1 ou 2, dans lequel une anse (4) applicable sur le conteneur (2) peut être moulée par injection et montée conjointement avec le conteneur (2) au cours d'une étape de travail.

4. Conteneur (2) selon la revendication 1, 2 ou 3 comprenant un couvercle hermétique (6 - 1 ), qui présente un dispositif de retenue (16) qui peut être mis en prise avec un dispositif de retenue (24) sur le conteneur (2), et dans lequel une zone d'étanchéité (12) périphérique et indépendante du dispositif de retenue (24) est conformée sur le bord supérieur du conteneur, laquelle peut être mise en prise avec une zone d'étanchéité (20) du couvercle hermétique (6 - 1).

5. Conteneur (2) selon la revendication 1, 2 ou 3 comprenant un couvercle couvrant (6 - 2) qui présente un dispositif de retenue (16) qui peut être mis en prise avec un dispositif de retenue (24) sur le conteneur (2), et dans lequel un bord supérieur périphérique du conteneur (2) est conformé à distance du dispositif de retenue (24), lequel bord supérieur peut être fermé avec une feuille à cacheter (14).

6. Conteneur selon la revendication 4 ou 5, dans lequel le couvercle (6-1,6-2) présente un bord périphérique formé par une paroi périphérique extérieure (11), une surface annulaire (17) et une paroi annulaire (19), la paroi annulaire (19) s'étendant radialement à li'ntérieur de la surface annulaire (17).

7. Conteneur selon la revendication 6, dans lequel le bord périphérique présente un profil en coupe transversale essentiellement en forme de U.

8. Conteneur selon la revendication 6, dans lequel la paroi annulaire (19) est conformée en gradins et il y a une surface (19₃) annulaire et perpendiculaire à l'axe du conteneur entre deux sections 19₁, 19₂) de paroi.

9. Conteneur selon la revendication 8, dans lequel la paroi annulaire (19) en gradins accueille de manière centrée des formes différentes du fond du conteneur (2).

10. Conteneur selon la revendication 7 à 9, dans lequel il est prévu au moins un élément d'appui (22) à l'intérieur du bord périphérique du couvercle (6 - 1, 6 - 2) ou s'étendant radialement vers l'intérieur à partir du bord périphérique.

11. Conteneur (2) selon la revendication 4 à 10, dans lequel la surêté contre la rotation a la forme d'une encoche (38) sur le bord supérieur du conteneur et d'un élément de sûreté (40) pouvant être mis en prise avec celle-ci, lequel est conformé sur un côté du bord supérieur du conteneur opposé à l'encoche de sorte que, lors de l'empilage, un premier conteneur (2) supérieur s'engage avec son élément de sûreté (40) dans l'encoche (38) d'un deuxième conteneur (2) inférieur; l'élément de sûreté (40) et / ou l'encoche (38) étant chanfreiné et / ou arrondi des deux côtés pour permettre un engagement plus facile des éléments de la sûreté contre la rotation l'un dans l'autre.

12. Conteneur (2) selon la revendication 1, 2 ou 11, dans lequel l'élément de sûreté (40) est fixé par au moins une arête (30, 42) sur un côté extérieur (28) du conteneur (2) et / ou sur la paroi (26) du conteneur.

13. Conteneur (2) selon la revendication 12, dans lequel l'arête (30, 42) est conformée de telle manière que l'élément de sûreté (40) peut y être fixé de manière stable.

14. Conteneur (2) selon une des revendications 4 à 10, dans lequel la sûreté contre la rotation a la forme d'une encoche (38) sur le bord supérieur du conteneur et d'un élément de sûreté (40) pouvant être mis en prise avec celle-ci, lequel est conformé sur un côté du bord supérieur du conteneur opposé à l'encoche de sorte que, lors de l'empilage, un premier conteneur (2) supérieur s'engage avec son élément de sûreté (40) dans l'encoche (38) d'un deuxième conteneur (2) inférieur; l'élément de sûreté (40) étant formé de deux arêtes qui s'étendent entre la paroi (26) du conteneur et une paroi extérieure (28) du conteneur (2).

15. Conteneur (2) selon une des revendications 3 à 14, dans lequel la sûreté contre la rotation (38, 40) est prévue dans une zone articulée (32) de l'anse (4).

16. Conteneur (2) selon une des revendications 1 à 15, dans lequel un dispositif de retenue (24) pour un couvercle (6) est prévu sur le bord supérieur du conteneur.

17. Conteneur (2) selon la revendication 16, dans lequel le dispositif de retenue (24) est prévu avec au moins un bec de retenue pour retenir le couvercle.

18. Conteneur (2) selon une des revendications 10 à 17, dans lequel il est prévu pour l'empilage des conteneurs (2), entre la paroi (26) du conteneur et la paroi extérieure (28) un élément de renforcement (30) présentant un étagement (31) dont les gradins correspondent à la forme du bord supérieur du conteneur (2).

19. Conteneur (2) selon une des revendications 16 à 18, dans lequel le dispositif de retenue (24) est prévu pour être périphérique..

20. Conteneur (2) selon une des revendications 1 à 19, dans lequel le couvercle (6) repose sur le conteneur de telle manière qu'une section périphérique (11) extérieure repose avec sa zone inférieure (13) du bord sur ou contre un col (15) périphérique formé sur le conteneur afin que le couvercle (6) ne puisse être retiré sans l'enlèvement préalable d'une sûreté d'origine, parce qu'il n'existe aucune possibilité de pénétration entre le conteneur (2) et le couvercle (6).

21. Conteneur (2) selon une des revendications 3 à 20, dans lequel l'anse présente un entraîneur (44) qui est conformé de telle manière que l'anse peut être orientée de manière essentiellement perpendiculaire à un axe longitudinal (50) du conteneur (2) en coopération avec un système de maniement de l'anse (4).

22. Conteneur (2) selon la revendication 21, dans lequel l'anse (4) présente au moins une section (44) faisant saillie au-delà de son point de rotation dans le sens longitudinal de l'anse, laquelle peut être mise en contact avec un dispositif (46) pour le maniement du conteneur (2) afin d'orienter l'anse (4) de manière essentiellement perpendiculaire à l'axe longitudinal (50) du conteneur.

23. Conteneur selon une des revendications 1 à 22, dans lequel des pivots (32) d'articulation sont prévus, lesquels présentent chacun deux becs encliquetables (34) séparés par un espace libre (35).

24. Conteneur selon la revendication 23, dans lequel un élément d'appui (36) est prévu dans l'espace libre (35).

25. Conteneur selon la revendication 24, dans lequel les deux becs encliquetables (34) sont essentiellement en forme de croissant.

26. Conteneur selon une des revendications 1 à 25, dans lequel le conteneur est un seau.

27. Conteneur selon une des revendications 1 à 25, dans lequel le conteneur est un pot

28. Procédé pour manier un conteneur (2) selon la revendication.21 ou 22, dans lequel un dispositif (46) dans un système de maniement est mis en contact avec une section (44) faisant saillie dans son sens longitudinal au-delà du point de rotation de l'anse (4) afin que l'anse (4) soit orientée et maintenue de manière essentiellement perpendiculaire à l'axe longitudinal du conteneur (2).

29. Procédé pour la fabrication de conteneurs (2) en matière synthétique avec une anse (4), selon une des revendications 3 à 22, dans un moule à injection, dans lequel le conteneur (2) avec l'élément de sûreté (40) disposé dans l'espace intermédiaire entre la paroi (26) du conteneur et une zone supérieure (28) du bord non recouverte et l'anse (4) sont moulés ensemble par injection au cours d'une étape de travail et l'anse est automatiquement montée sur le conteneur (2) lors du démoulage.

30. Procédé selon la revendication 29, dans lequel pour le montage de l'anse (4) sur le conteneur (2), un noyau (54) du moule pour former un orifice (52) sur l'anse sert de guide pour fixer l'anse (4) au pivot (32) d'articulation formé sur le conteneur (2) en ce sens q'une gaine moulée (60) guidée par une gaine moulée (56) presse l'orifice (52) dans l'anse (4) sur le pivot (32) d'articulation lors du démoulage.

31. Procédé selon la revendication 30, dans lequel le noyau (54) de moule présente un noyau (55) pouvant être déplacé à l'intérieur pour former la surface intérieure du pivot '32) d'articulation.

32. Procédé selon la revendication 29, 30 ou 31, dans lequel l'anse (4) et le conteneur (2) en différentes couleurs et / ou en différentes matières peuvent être injectés simultanément dans un moule.

33. Procédé selon une des revendications 29 à 32, dans lequel le conteneur (2) est pourvu d'une étiquette imprimée et / ou d'une étiquette moulée intégrée.
